# EUROPEAN PATENT APPLICATION

(11) **EP 3 031 639 A1**
(43) Date of publication of application: **15.06.2016**
(21) Application number: 14834856.8
(22) Date of filing: 30.07.2014
(51) Int. Cl.: B60H 1/18, B60H 1/00, B60H 1/08

(54) **VEHICLE HEATING DEVICE**

(30) Priority: 06.08.2013 JP 2013163046
(71) Applicant: Panasonic Intellectual Property Management Co., Ltd., Osaka-shi, Osaka 540-6207 (JP)
(72) Inventor: NAKASHIMA, Yu, Osaka 540-6207 (JP); TERADA, Tomohiro, Osaka 540-6207 (JP); NODA, Yoshitoshi, Osaka 540-6207 (JP)
(74) Representative: Schwabe - Sandmair - Marx
(86) International application number: PCT/JP2014/003991
(87) International publication number: WO 2015/019577

(57) **Abstract**

A vehicle heating device includes: a first heat exchanger which performs heat exchange between an exhaust gas discharged from an engine and first air introduced from outside or inside of a vehicle interior; and a second heat exchanger which performs heat exchange between the first air subjected to the heat exchange with the exhaust gas in the first heat exchanger and second air taken into the second heat exchanger from the outside of the vehicle interior, discharges the first air subjected to the heat exchange to the outside of the vehicle interior, and supplies the second air subjected to the heat exchange to the inside of the vehicle interior.

## Description

### TECHNICAL FIELD

The present disclosure relates to a vehicle heating device which utilizes heat of an exhaust gas.

### BACKGROUND

Conventionally, studies have been made on efficiently heating a vehicle interior by utilizing a high-temperature exhaust gas discharged from an engine of a vehicle. As such a technique, there is known a heating device disclosed in PTL 1, for example.

PTL 1 discloses the heating device in which a heat exchanger is disposed downstream of an exhaust gas purifying catalyst in an exhaust passage of an engine, and heat exchange is performed between a high-temperature exhaust gas and low-temperature outside air. Due to such heat exchange, heat exchange efficiency can be increased by effectively utilizing a reaction heat generated from the exhaust gas purifying catalyst.

In the heating device disclosed in PTL 1, when the heat exchanger is damaged and an exhaust gas flows into an outside air supply passage, a first mixing valve which mixes high-temperature outside air and low-temperature outside air is closed, thus interrupting communication between the outside air supply passage and the heat exchanger. Accordingly, it is possible to prevent the exhaust gas from flowing into the vehicle interior.

Further, the heating device disclosed in PTL 1 includes a first heat exchanger and a second heat exchanger. The first heat exchanger and the second heat exchanger are connected to each other by a circulation passage through which a medium such as air circulates, and heat exchange is performed between a high-temperature exhaust gas and a medium flowing through the circulation passage by the first heat exchanger to heat the medium, and heat exchange is performed between the high temperature medium and low-temperature outside air by the second heat exchanger in order to heat outside air.

### Citation List

### Patent Literature

PTL 1: Unexamined Japanese Patent Publication No. 2005-282503

### SUMMARY

### TECHNICAL PROBLEM

However, in the above-mentioned heating device disclosed in PTL 1, when the first heat exchanger is damaged, an exhaust gas is mixed into air flowing through the circulation passage. The heating device disclosed in PTL 1 includes the circulation passage and hence, the air mixed with the exhaust gas continues to circulate in the circulation passage without being discharged outside. As a result, substances contained in the exhaust gas are accumulated inside the circulation passage, thus giving rise to a drawback that heat exchange efficiency is lowered.

The present disclosure provides a vehicle heating device in which lowering of heat exchange efficiency can be prevented.

### SOLUTION TO PROBLEM

According to one aspect of the present disclosure, there is provided a vehicle heating device which includes: a first heat exchanger which performs heat exchange between an exhaust gas discharged from an engine and first air introduced from outside or inside of a vehicle interior; and a second heat exchanger which performs heat exchange between the first air subjected to the heat exchange with the exhaust gas in the first heat exchanger and second air taken into the second heat exchanger from the outside of the vehicle interior, then discharges the first air subjected to the heat exchange to the outside of the vehicle interior, and supplies the second air subjected to the heat exchange to the inside of the vehicle interior.

### ADVANTAGEOUS EFFECT

According to the present disclosure, first air introduced from the outside or the inside of the vehicle interior is subjected to heat exchange and, thereafter, discharged outside the vehicle interior. Accordingly, lowering of heat exchange efficiency can be prevented.

### BRIEF DESCRIPTION OF DRAWINGS

FIG. 1 is a diagram showing a schematic configuration of an air conditioning system according to a first exemplary embodiment of the present disclosure.
FIG. 2 is a view showing an internal configuration of a heat exchanger shown in FIG. 1.
FIG. 3 is a perspective view showing an external configuration of a sensible heat exchanger shown in FIG. 1.
FIG. 4 is a schematic view showing a state where the air conditioning system shown in FIG. 1 is mounted on a vehicle.
FIG. 5 is a perspective view showing the state where the air conditioning system shown in FIG. 1 is mounted on the vehicle as viewed from an obliquely front and upper side of the vehicle.
FIG. 6 is a view showing the state where the air conditioning system shown in FIG. 1 is mounted on the vehicle as viewed from a side of the vehicle.
FIG. 7 is a view showing a countercurrent sensible heat exchanger.
FIG. 8 is a diagram showing a schematic configuration of an air conditioning system according to a second exemplary embodiment of the present disclosure.
FIG. 9 is a schematic view showing a state where the air conditioning system shown in FIG. 8 is mounted on a vehicle.
FIG. 10 is a perspective view showing the state where the air conditioning system shown in FIG. 8 is mounted on the vehicle as viewed from an obliquely front and upper side of the vehicle.
FIG. 11 is a diagram showing a schematic configuration of an air conditioning system according to a third exemplary embodiment of the present disclosure.
FIG. 12 is a schematic view showing a state where the air conditioning system shown in FIG. 11 is mounted on a vehicle.
FIG. 13 is a perspective view showing an external configuration of an outside air-inside air switching device shown in FIG. 11.
FIG. 14 is a diagram showing a schematic configuration of an air conditioning system according to a fourth exemplary embodiment of the present disclosure.
FIG. 15 is a schematic view showing a state where the air conditioning system shown in FIG. 14 is mounted on a vehicle.
FIG. 16 is a perspective view showing an external configuration of a sensible heat exchanger provided with a heat storage material.

### DESCRIPTION OF EMBODIMENTS

Hereinafter, exemplary embodiments of the present disclosure are described in detail with reference to drawings. In the exemplary embodiments, the same constitutional elements are given the same symbols, and the repeated description of such constitutional elements is omitted.

### FIRST EXEMPLARY EMBODIMENT

### <Configuration of air conditioning system>

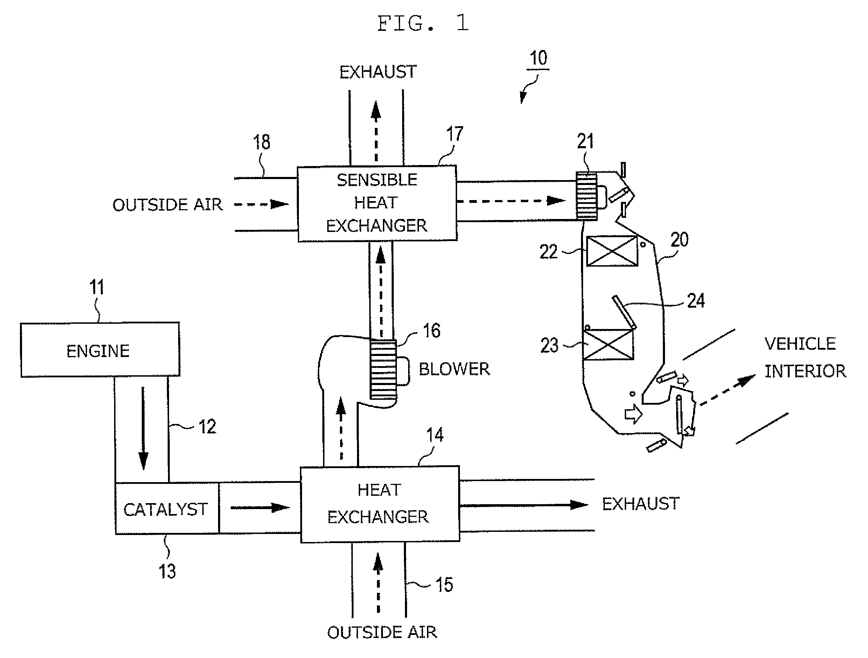

FIG. 1 is a diagram showing a schematic configuration of air conditioning system 10 according to a first exemplary embodiment of the present disclosure. In FIG. 1, solid arrows indicate the flow of an exhaust gas, and dotted arrows indicate the flow of outside air.

Engine 11 generates power by mixing fuel (gasoline, light oil or the like) having high volatility and air and by burning the air-fuel mixture. An exhaust gas generated by combustion in engine 11 is discharged through exhaust passage 12.

Catalyst 13 is disposed in exhaust passage 12. Catalyst 13 is made of platinum, palladium, rhodium or the like. Catalyst 13 purifies an exhaust gas discharged from engine 11 by oxidizing or reducing harmful components (mainly hydrocarbon, carbon monoxide, nitrogen oxide) contained in the exhaust gas, and the purified exhaust gas is discharged to heat exchanger 14. High-temperature reaction heat is generated in catalyst 13 by an oxidation-reduction reaction.

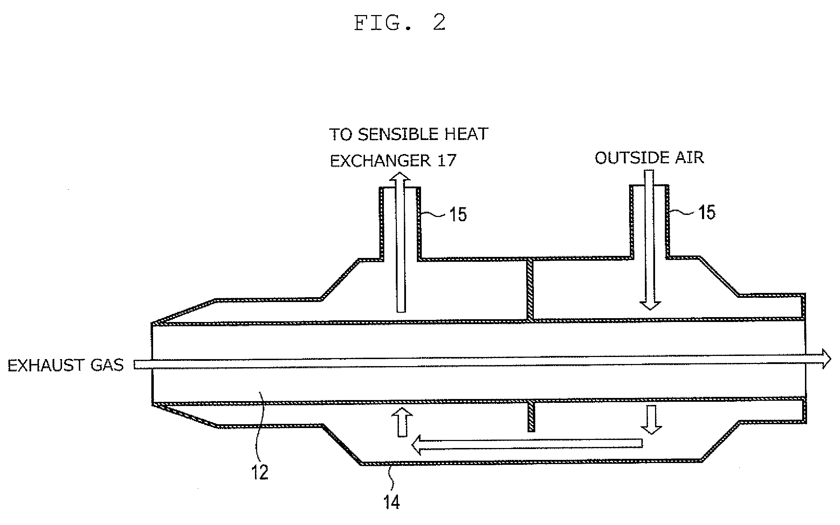

Heat exchanger 14 (corresponding to a first heat exchanger) is formed of stainless steel, for example, and is disposed in exhaust passage 12 downstream of catalyst 13. As shown in FIG. 2, heat exchanger 14 is configured such that exhaust passage 12 and first air passages 15 through which outside air is introduced are brought into contact with each other so as to allow heat exchange, and is also configured such that an exhaust gas and outside air are not mixed. Heat exchanger 14 performs heat exchange between an exhaust gas and outside air, and heat is radiated from high-temperature exhaust gas to low-temperature outside air. The exhaust gas discharged from heat exchanger 14 is discharged outside a vehicle, and outside air discharged from heat exchanger 14 is supplied to sensible heat exchanger 17 via blower 16.

Blower 16 is disposed in first air passage 15 which connects heat exchanger 14 and sensible heat exchanger 17. Blower 16 sucks outside air heated in heat exchanger 14, and supplies the sucked outside air to sensible heat exchanger 17.

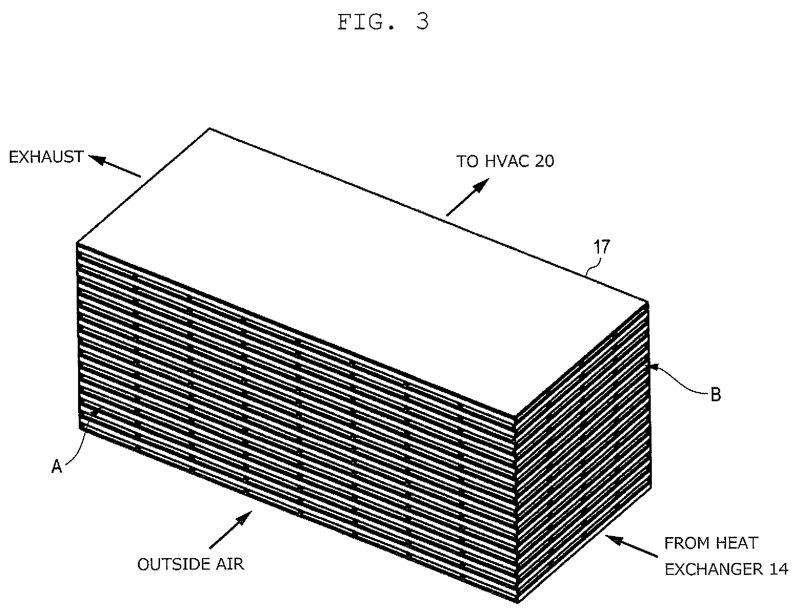

Sensible heat exchanger 17 (corresponding to a second heat exchanger) is formed of aluminum or polypropylene, for example. As shown in FIG. 3, sensible heat exchanger 17 is a stationary heat exchanger in which flow passages are fixed. Sensible heat exchanger 17 includes flow passages A, B of two systems adjacent to each other, where low-temperature outside air flows through one flow passage A, and high-temperature outside air flows through the other flow passage B. With such a configuration, sensible heat exchanger 17 can transfer heat of air flowing through flow passage B to air flowing through flow passage A without mixing air in flow passage A and air in flow passage B. A large number of fine flow passages are formed in flow passages A, B of respective systems, and the fine flow passages of the respective systems are arranged so as to intersect with each other. Accordingly, a contact area between flow passages A, B of two systems is increased.

In sensible heat exchanger 17, second air passage 18 which is a passage through which low-temperature outside air flows is connected to one end and the other end of flow passage A. Further, in sensible heat exchanger 17, first air passage 15 is connected to one end and the other end of flow passage B.

Due to the above-mentioned connection between sensible heat exchanger 17 and the respective passages, low-temperature outside air introduced from outside of a vehicle flows through flow passage A of sensible heat exchanger 17, and high-temperature outside air heated in heat exchanger 14 flows through flow passage B of sensible heat exchanger 17. In sensible heat exchanger 17, heat is transferred from high-temperature outside air to low-temperature outside air so that recovery of heat in exhaust is performed.

HVAC (Heating, Ventilation, and Air Conditioning) 20 is disposed on a vehicle interior side of a partition wall (firewall) (not shown) which separates an engine room and the inside of the vehicle interior. HVAC 20 includes: blower 21 for supplying air; cooling air-refrigerant heat exchanger 22 and heating air-refrigerant heat exchanger 23 which are sequentially disposed from upstream to downstream in an air supply passage of blower 21, and which form a heat pump cycle; and switching door 24. HVAC 20 blows out air whose temperature is controlled by cooling air-refrigerant heat exchanger 22 and heating air-refrigerant heat exchanger 23 into the vehicle interior, thus performing air conditioning of the inside of the vehicle interior.

In this manner, in air conditioning system 10, outside air taken into air conditioning system 10 from an intake port of first air passage 15 is subjected to heat exchange and, thereafter, discharged outside the vehicle interior. Accordingly, even when heat exchanger 14 is damaged, air mixed with the exhaust gas can be discharged outside the vehicle interior without circulating in the air conditioning system 10. Further, air conditioning system 10 performs heat exchange in two stages where heat exchange is performed between an exhaust gas and outside air in heat exchanger 14 and, thereafter, heat exchange is performed between the heated high-temperature outside air and low-temperature outside air in sensible heat exchanger 17. Accordingly, even when heat exchanger 14 is damaged, it is possible to prevent the exhaust gas from flowing into the vehicle interior. Further, it is unnecessary to provide means for detecting a concentration of an exhaust gas and a device for interrupting the inflow of an exhaust gas in exhaust passage 12 and hence, the maintenance of air conditioning system 10 can be easily performed.

### <Mounting and arrangement of air conditioning system on vehicle>

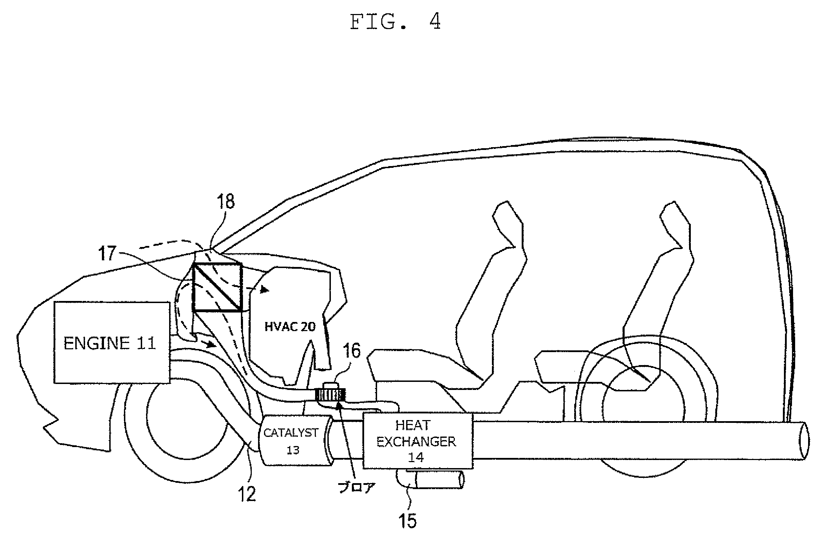

FIG. 4 is a schematic view showing a state where air conditioning system 10 shown in FIG. 1 is mounted on a vehicle. As shown in FIG. 4, the intake port of first air passage 15 has an opening portion directed toward a rear side of the vehicle, and is disposed on a bottom portion of the vehicle. Outside air is sucked into first air passage 15 from the intake port by blower 16. On the other hand, a discharge port of first air passage 15 is disposed below a floor of the vehicle, and high-temperature outside air discharged from the discharge port is guided by the flow of air generated by the rotation of a tire during traveling.

An intake port of second air passage 18 is generally disposed below a cowl top disposed in front of a windshield, and is an existing air intake port (an outside air intake port of the HVAC). On the other hand, a discharge port of second air passage 18 is directly connected to blower 21 of HVAC 20 (see FIG. 1).

### <Mounting and arrangement of sensible heat exchanger on vehicle>

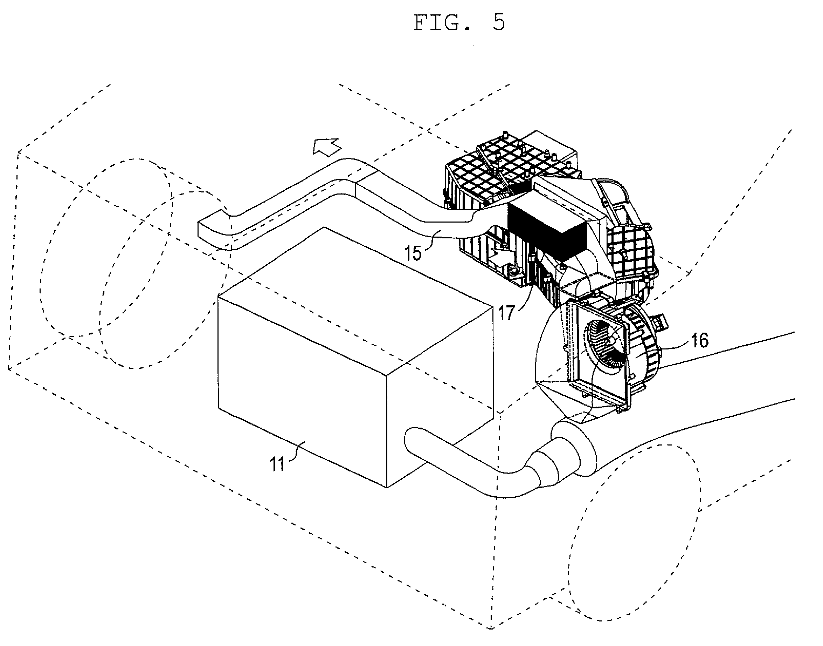

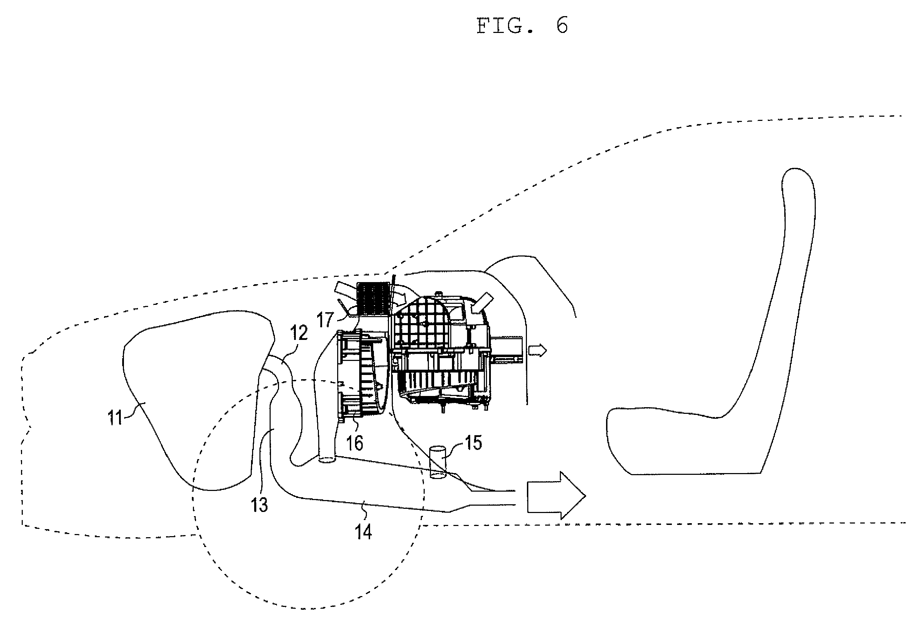

FIG. 5 is a perspective view showing a state where air conditioning system 10 shown in FIG. 1 is mounted on the vehicle as viewed from an obliquely front and upper side of the vehicle, and FIG. 6 is a view as viewed from a side of the vehicle.

As can be understood from these figures, sensible heat exchanger 17 is disposed such that flow passage A is directed in the longitudinal direction of the vehicle, and flow passage B is directed in the lateral direction of the vehicle. Sensible heat exchanger 17 is disposed inside an intake duct which is disposed below the cowl top located in front of the windshield and into which outside air is introduced. With such a configuration, sensible heat exchanger 17 is disposed away from exhaust passage 12 and hence, clean outside air can be taken into the vehicle interior.

### <Advantageous effects obtained by first exemplary embodiment>

In the first exemplary embodiment, outside air taken into first air passage 15 from the intake port of first air passage 15 is subjected to heat exchange and, thereafter, discharged outside the vehicle interior. As a result, even when heat exchanger 14 is damaged, air mixed with the exhaust gas is discharged outside the vehicle interior without circulating. As described above, according to the first exemplary embodiment, since substances contained in an exhaust gas are not accumulated inside first air passage 15, lowering of heat exchange efficiency can be prevented.

Further, since substances contained in an exhaust gas are not accumulated inside first air passage 15, even when heat exchanger 14 is damaged, deterioration of pipes forming first air passage 15 caused by an exhaust gas can be prevented.

According to the first exemplary embodiment, air conditioning system 10 includes: heat exchanger 14 which performs heat exchange between an exhaust gas and outside air; and sensible heat exchanger 17 which performs heat exchange between high-temperature outside air heated in heat exchanger 14 and low-temperature outside air introduced into the vehicle interior and hence, even when heat exchanger 14 is damaged, it is possible to prevent the exhaust gas from flowing into the vehicle interior.

First air passage 15 is not formed as a circulation passage and hence, even when the first heat exchanger and the second heat exchanger are disposed at positions away from each other, the number of pipes for forming first air passage 15 can be reduced. Accordingly, freedom to the arrangement of the pipes can be obtained.

By disposing sensible heat exchanger 17 away from exhaust passage 12, clean outside air can be taken into the vehicle interior.

Further, it is unnecessary to provide means for detecting the concentration of exhaust gas and the device for interrupting the flow of an exhaust gas in exhaust passage 12 and hence, the maintenance of air conditioning system 10 can be easily performed.

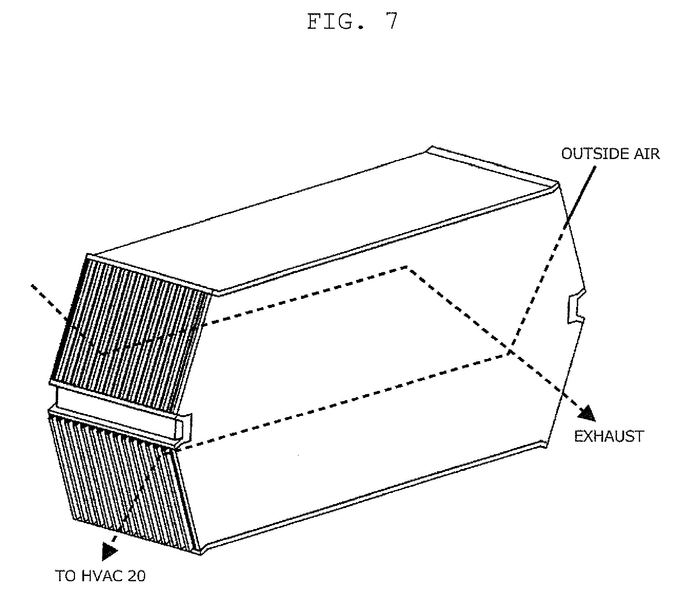

In this exemplary embodiment, as shown in FIG. 3, the description has been made of the case where the sensible heat exchanger is a cross-flow heat exchanger by way of example. However, the present disclosure is not limited thereto. For example, as shown in FIG. 7, the sensible heat exchanger may be a countercurrent heat exchanger.

### SECOND EXEMPLARY EMBODIMENT

In the first exemplary embodiment, the description has been made of the case where the intake port of the first air passage which connects the heat exchanger and the sensible heat exchanger has the opening portion directed toward a rear side of the vehicle. In a second exemplary embodiment of the present disclosure, the description is made of a case where the intake port of the first air passage has the opening portion directed toward a front side of the vehicle.

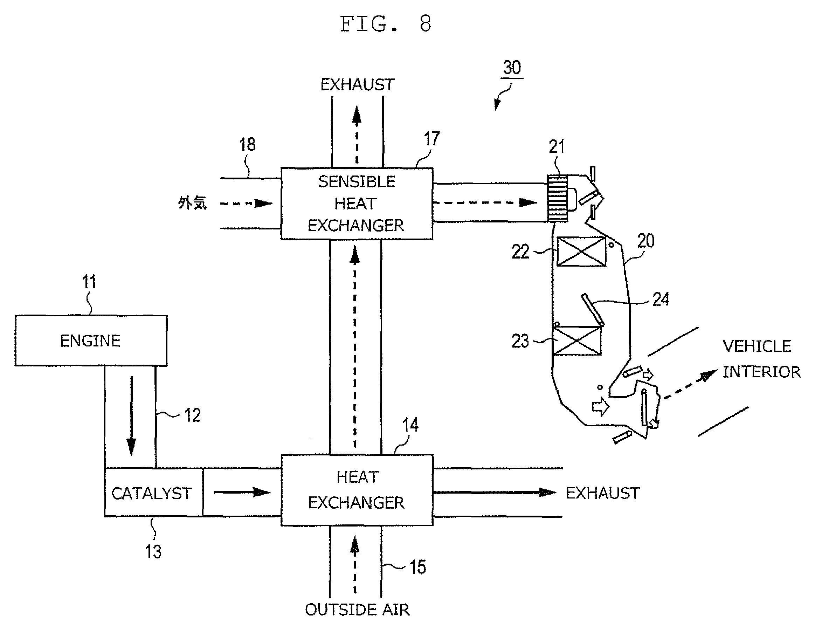

FIG. 8 is a diagram showing a schematic configuration of air conditioning system 30 according to the second exemplary embodiment of the present disclosure. A point which makes air conditioning system 30 shown in FIG. 8 different from air conditioning system 10 shown in FIG. 1 is that blower 16 is eliminated, and other configurations are substantially equal to those shown in FIG. 1.

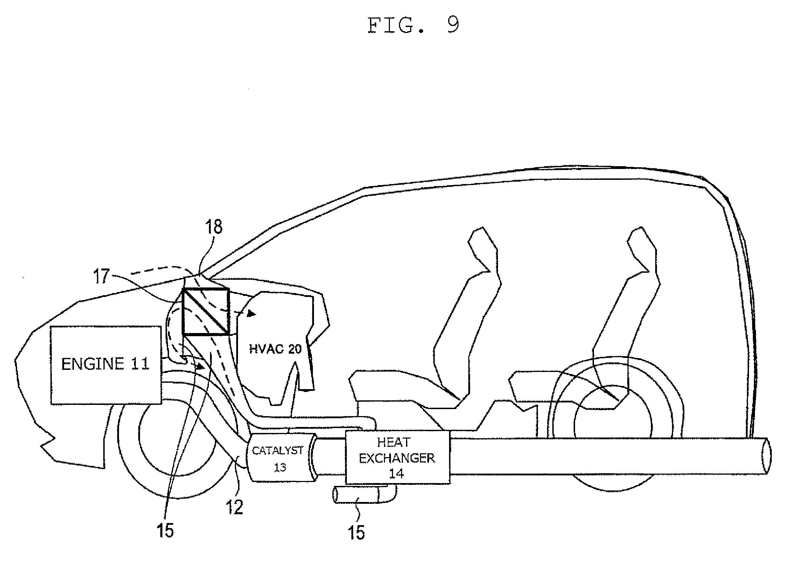

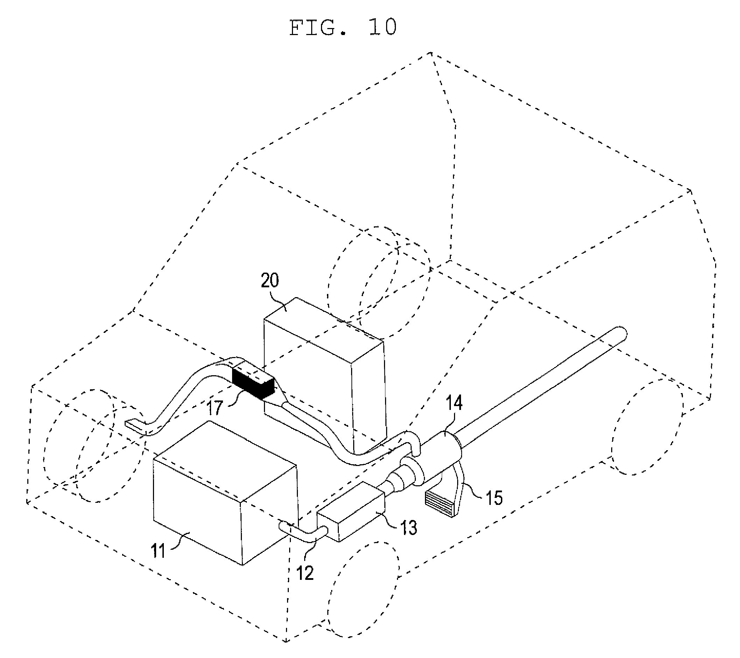

FIG. 9 is a schematic view showing a state where air conditioning system 30 shown in FIG. 8 is mounted on a vehicle, and FIG. 10 is a perspective view showing the state where air conditioning system 30 shown in FIG. 8 is mounted on the vehicle as viewed from an obliquely front and upper side of the vehicle.

As shown in these figures, the intake port of first air passage 15 has the opening portion directed toward the front side of the vehicle, and is disposed on a bottom portion of the vehicle. Outside air is taken into first air passage 15 from the intake port along with traveling of the vehicle. With such a configuration, it is unnecessary to provide the blower in first air passage 15 and hence, a scale of a device can be reduced and, at the same time, a manufacturing cost can be reduced.

When the intake port of first air passage 15 has the opening portion directed toward the front side of the vehicle, mud, water, snow or the like splashed by a tire may be taken into first air passage 15 and may clog first air passage 15. Accordingly, it is necessary to provide a filter to the opening portion or to dispose a shielding plate or the like in front of the opening portion.

### <Advantageous effects obtained by second exemplary embodiment>

In this manner, according to the second exemplary embodiment, the intake port of the first air passage which connects heat exchanger 14 and sensible heat exchanger 17 has the opening portion directed toward the front side of the vehicle and hence, outside air can be taken into first air passage 15 from the intake port along with traveling of the vehicle. Accordingly, it is unnecessary to provide the blower in first air passage 15 and hence, a scale of a device can be reduced and, at the same time, a manufacturing cost can be reduced.

### THIRD EXEMPLARY EMBODIMENT

In the first exemplary embodiment, the description has been made of the case where outside air is introduced into the heat exchanger. In a third exemplary embodiment of the present disclosure, the description is made of a case where air to be introduced into the heat exchanger is switched between outside air and inside air in a vehicle interior.

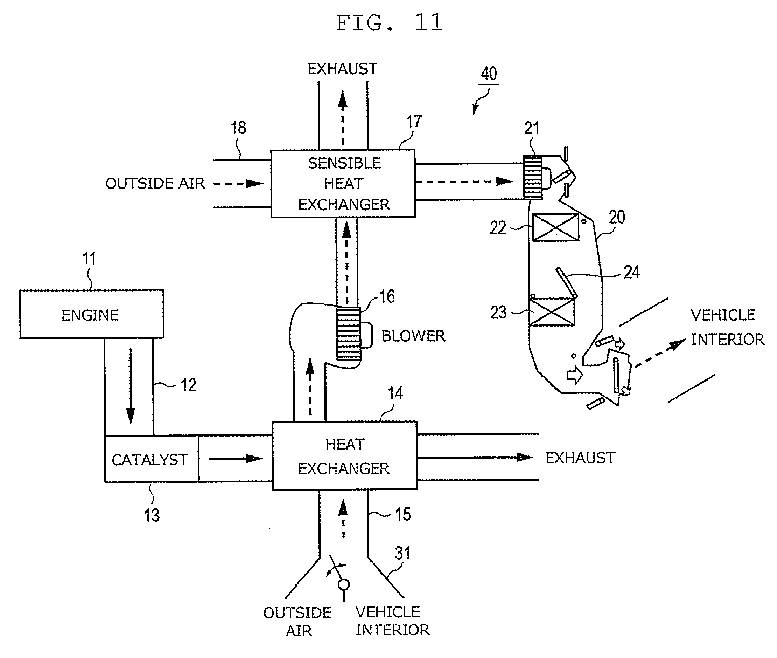

FIG. 11 is a diagram showing a schematic configuration of air conditioning system 40 according to a third exemplary embodiment of the present disclosure. A point which makes air conditioning system 40 shown in FIG. 11 different from air conditioning system 10 shown in FIG. 1 is that outside air-inside air switching device 31, which switches air to be taken into air conditioning system 40 from an intake port of first air passage 15 between outside air and inside air in the vehicle interior, is added to air conditioning system 40, and other configurations are substantially equal to those shown in FIG. 1.

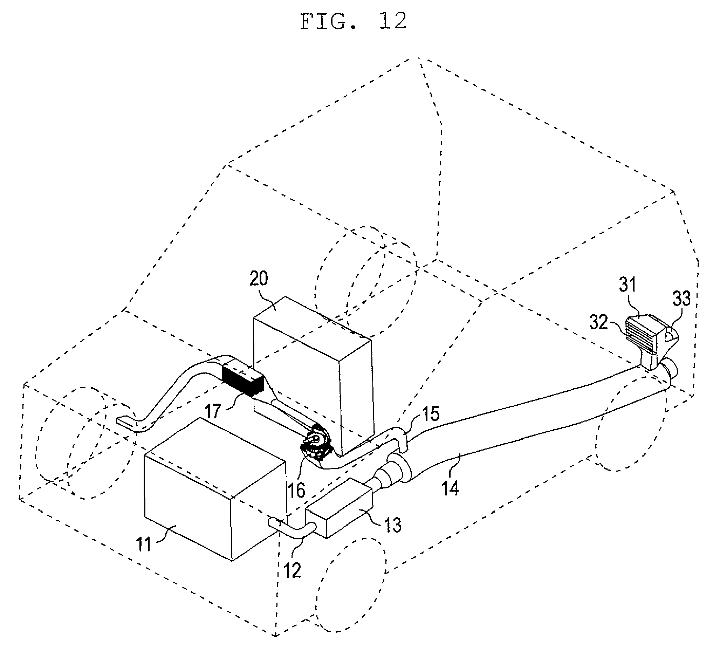

FIG. 12 is a schematic view showing a state where air conditioning system 40 shown in FIG. 11 is mounted on a vehicle. Heat exchanger 14 is provided over the whole region of exhaust passage 12 downstream of catalyst 13, and the intake port of first air passage 15 is provided in the vicinity of a discharge port of exhaust passage 12.

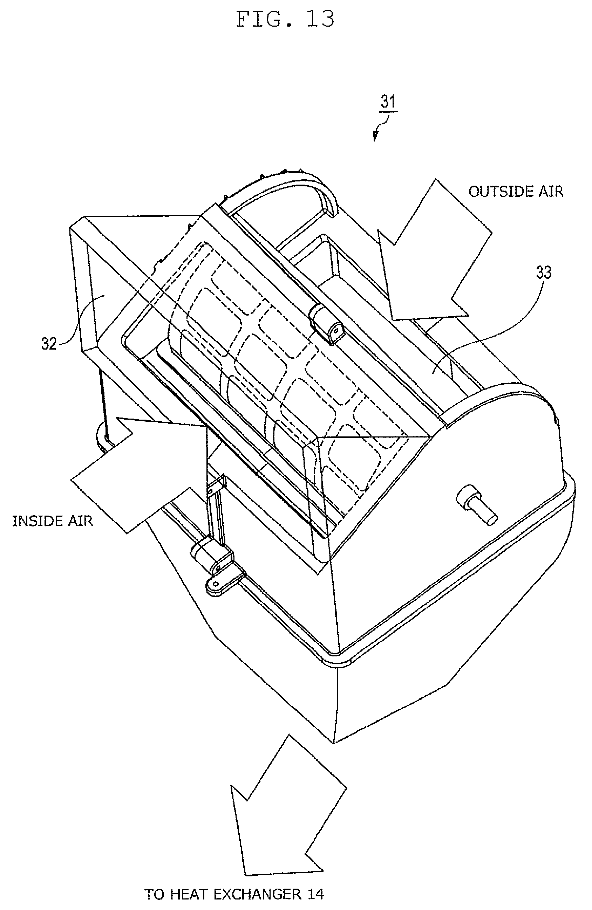

Outside air-inside air switching device 31 is mounted on the intake port of first air passage 15. As shown in FIG. 13, outside air-inside air switching device 31 includes inside air intake port 32 and outside air intake port 33, and switches the degree of opening of inside air intake port 32 and the degree of opening of outside air intake port 33. Inside air intake port 32 is connected to an existing air (inside air) discharge port (disposed in the vicinity of a rear pillar, in the vicinity of a drafter for a tail lamp or the like, for example), and inside air is taken into air conditioning system 40 from inside air intake port 32. Outside air is taken into air conditioning system 40 from outside air intake port 33 from a rear side of a vehicle.

Outside air-inside air switching device 31 takes in inside air at the time of starting an engine when a temperature of the engine is low, and outside air-inside air switching device 31 takes in outside air when a temperature of the engine reaches a prescribed temperature. Due to such an operation, at the time of starting the engine when a temperature of the engine is low, quick heating performance and thermal efficiency can be enhanced, and when a temperature of the engine reaches a prescribed temperature, the temperature adjustment can be easily performed by preventing a temperature of outside air from becoming excessively high.

### <Advantageous effects obtained by third exemplary embodiment>

As described above, according to the third exemplary embodiment, air conditioning system 40 includes outside air-inside air switching device 31 which switches air to be taken into air conditioning system 40 from the intake port of first air passage 15, connecting heat exchanger 14 and sensible heat exchanger 17, between outside air and inside air. With such a configuration, outside air-inside air switching device 31 takes in inside air at the time of starting the engine when a temperature of the engine is low so that quick heating performance is enhanced, and outside air-inside air switching device 31 takes in outside air when a temperature of the engine reaches a prescribed temperature so that the temperature adjustment can be easily performed by preventing a temperature of outside air from becoming excessively high.

### FOURTH EXEMPLARY EMBODIMENT

In the first exemplary embodiment, the description has been made of the case where outside air is introduced into the heat exchanger. In a fourth exemplary embodiment of the present disclosure, the description is made of a case where air introduced into the heat exchanger is inside air in the vehicle interior.

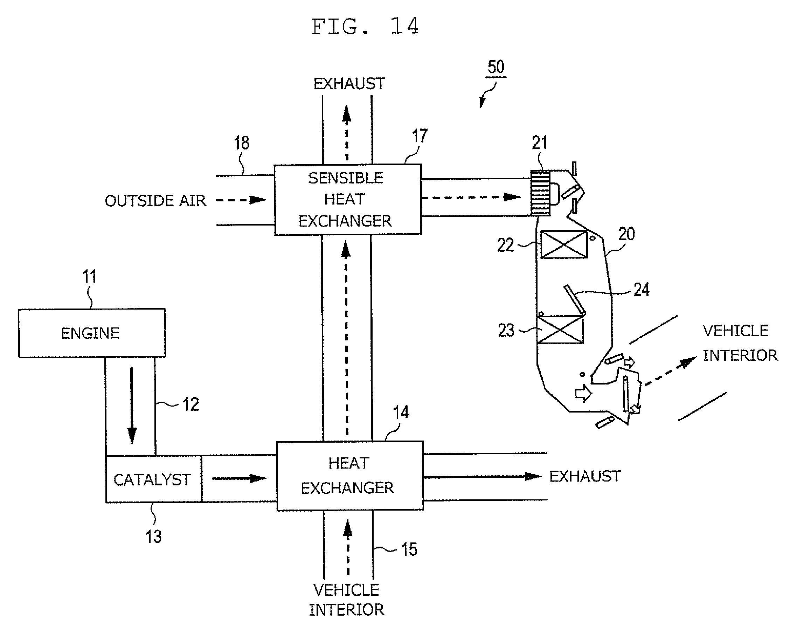

FIG. 14 is a diagram showing a schematic configuration of air conditioning system 50 according to a fourth exemplary embodiment of the present disclosure. A point which makes air conditioning system 50 shown in FIG. 14 different from air conditioning system 10 shown in FIG. 1 is that air to be taken into first air passage 15 from an intake port of first air passage 15 is inside air in the vehicle interior, and other configurations are substantially equal to those shown in FIG. 8.

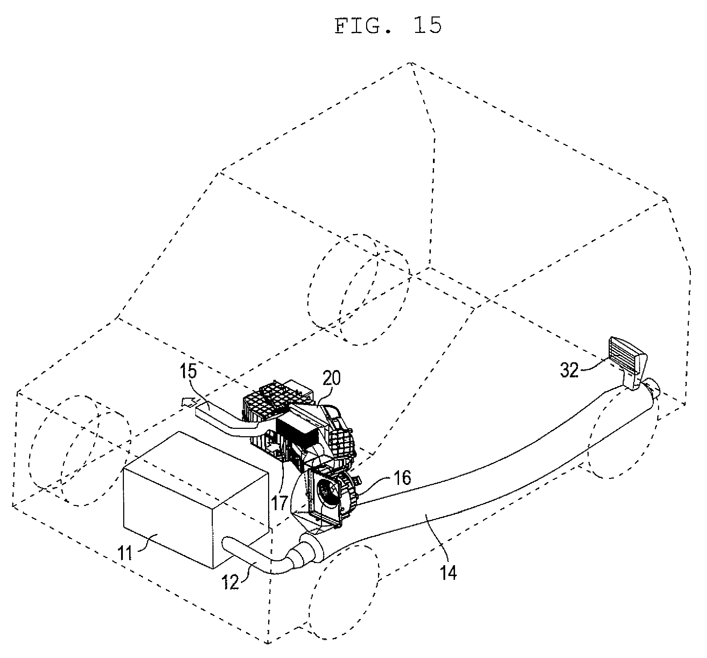

FIG. 15 is a schematic view showing a state where air conditioning system 50 shown in FIG. 14 is mounted on a vehicle. Heat exchanger 14 is provided over the whole region of exhaust passage 12 downstream of catalyst 13.

First air passage 15 includes inside air intake port 32, and inside air intake port 32 is provided in the vicinity of a discharge port of exhaust passage 12. Inside air intake port 32 is connected to an existing air (inside air) discharge port (disposed in the vicinity of a rear pillar, a drafter for a tail lamp or the like, for example), and inside air is taken into air conditioning system 50 from inside air intake port 32. With such a configuration, quick heating performance and thermal efficiency can be enhanced compared to a case where low-temperature outside air is taken into air conditioning system 50.

### < Advantageous effects obtained by fourth exemplary embodiment>

In this manner, according to the fourth exemplary embodiment, inside air is taken into air conditioning system 50 from inside air intake port 32 of first air passage 15 connecting heat exchanger 14 and sensible heat exchanger 17 and hence, quick heating performance and thermal efficiency can be enhanced compared to a case where low-temperature outside air is taken into air conditioning system 50.

### OTHER EXEMPLARY EMBODIMENTS

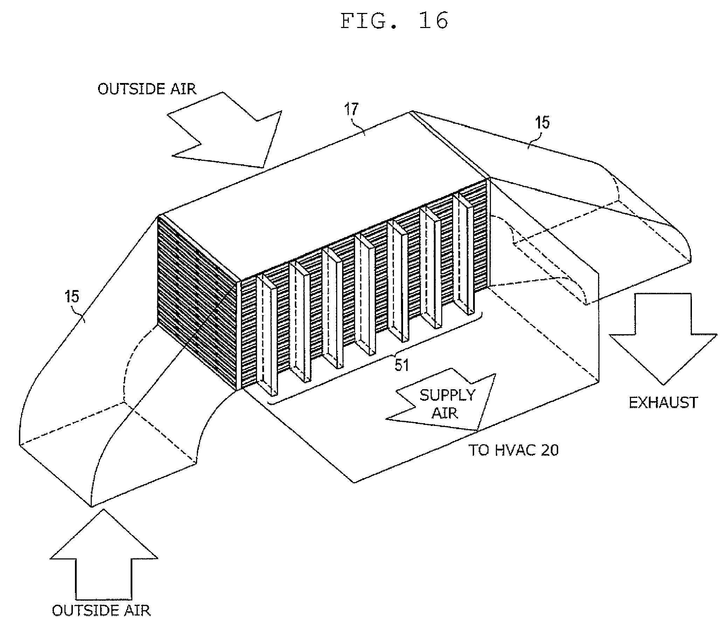

As shown in FIG. 16, heat storage materials 51 which store heat may be provided to above-mentioned sensible heat exchanger 17 in the respective exemplary embodiments. In FIG. 16, a plurality of heat storage materials 51 are arranged in a row in the longitudinal direction at a blowout port of sensible heat exchanger 17 from which air is blown out to a vehicle interior, and heat of outside air heated by sensible heat exchanger 17 is stored in heat storage materials 51. Heat storage materials 51 are disposed so as not to interrupt the flow of air.

With such a configuration, even in a case where a temperature of an exhaust gas is not sufficiently high such as a case where an engine is restarted, it is possible to utilize heat stored in heat storage materials 51 and hence, quick heating performance can be enhanced.

### INDUSTRIAL APPLICABILITY

A vehicle heating device according to the present disclosure is applicable to a vehicle which includes an internal combustion engine such as a gasoline engine or a diesel engine.

### REFERENCE MARKS IN THE DRAWINGS

- 11: engine
- 12: exhaust passage
- 13: catalyst
- 14: heat exchanger
- 15: first air passage
- 16, 21: blower
- 17: sensible heat exchanger
- 20: HVAC
- 22: cooling air-refrigerant heat exchanger
- 23: heating air-refrigerant heat exchanger
- 24: switching door
- 31: outside air-inside air switching device
- 32: inside air intake port
- 33: outside air intake port
- 51: heat storage material

## Claims

1. A vehicle heating device comprising:
a first heat exchanger which performs heat exchange between an exhaust gas discharged from an engine and first air introduced from inside or outside of a vehicle interior; and
a second heat exchanger which performs heat exchange between the first air subjected to the heat exchange with the exhaust gas in the first heat exchanger and second air taken into the second heat exchanger from the outside of the vehicle interior, then discharges the first air subjected to the heat exchange to the outside of the vehicle interior, and supplies the second air subjected to the heat exchange to the inside of the vehicle interior.

2. The vehicle heating device according to claim 1, wherein
the second heat exchanger is a sensible heat exchanger.

3. The vehicle heating device according to claim 1 or 2, wherein
the second heat exchanger is disposed inside an intake duct which is located in front of a windshield and into which outside air is introduced.

4. The vehicle heating device according to any one of claims 1 to 3 further comprising a first air passage through which the first air introduced from the outside or the inside of the vehicle interior is guided to the first heat exchanger and the second heat exchanger,
wherein the first air passage includes an exhaust port for discharging the first air subjected to the heat exchange to the outside of the vehicle interior, the exhaust port being disposed below a floor of a vehicle.

5. The vehicle heating device according to claim 4, wherein
the first air passage includes an intake port having an opening portion directed toward a front side of the vehicle and sucking air from the outside of the vehicle interior, the intake port being disposed on a bottom portion of the vehicle.

6. The vehicle heating device according to claim 4, wherein
the first air passage includes a switching member which allows intake of air by switching between air outside the vehicle interior and air inside the vehicle interior.

7. The vehicle heating device according to claim 4, wherein
the first air passage includes an intake port for sucking air inside the vehicle interior.

8. The vehicle heating device according to any one of claims 1 to 7,
wherein
the second heat exchanger includes a heat storage material for storing heat in a blowout port for blowing out the second air.
